(19) **Europäisches Patentamt**

**European Patent Office**

**Office européen des brevets**

(11) Veröffentlichungsnummer: **0 113 131**

**B1**

(12) **EUROPÄISCHE PATENTSCHRIFT**

(45) Veröffentlichungstag der Patentschrift:
24.02.88

(51) Int. Cl.⁴: **B 42 D 15/02**

(21) Anmeldenummer: **83113221.2**

(22) Anmeldetag: **29.12.83**

(54) **Ausweiskarte.**

(30) Priorität: **31.12.82 DE 3248784**

(43) Veröffentlichungstag der Anmeldung:
**11.07.84 Patentblatt 84/28**

(45) Bekanntmachung des Hinweises auf die Patenterteilung:
**24.02.88 Patentblatt 88/8**

(84) Benannte Vertragsstaaten:
**AT BE CH DE FR GB IT LI LU NL SE**

(56) Entgegenhaltungen:
**DE-A-2 223 290**
**FR-A-2 449 930**
**FR-A-2 496 936**

(73) Patentinhaber: **GAO Gesellschaft für Automation und Organisation mbH, Euckenstrasse 12, D-8000 München 70 (DE)**

(72) Erfinder: **Maurer, Thomas, Apolloweg 12, D-8000 München 60 (DE)**
Erfinder: **Devrient, Ludwig, Mauerkircherstrasse 168, D-8000 München 81 (DE)**

(74) Vertreter: **Klunker . Schmitt- Nilson . Hirsch, Winzererstrasse 106, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft eine Ausweiskarte mit alphanumerischen Zeichen, die als Druckstock verwendbar in hochgeprägter Form vorliegen und weiteren aufgedruckten Informationen in Form von alphanumerischen Zeichen oder Bildern sowie ein Verfahren zur Herstellung derselben.

Es ist seit langem üblich, Ausweiskarten mit hochgeprägten Zeichen zu versehen. Normalerweise werden auf diesem Weg die kundenbezogenen Daten, wie zum Beispiel Name des Karteninhabers, Kontonummer, Kartennummer etc. in die Ausweiskarte eingebracht (DE-PS-1 436 810).

Die Hochprägung der Ausweiskarte hat sich besonders bewährt, da die Kartenpersonalisierung, d. h. das Einbringen der Kundendaten, an den fertig kaschierten Karten durchgeführt werden kann, nachdem die auf mangelhaften Druck und mangelhafte Kaschierung zurückzuführenden Ausschußkarten bereits ausgesondert sind. Hochprägedaten können unabhängig vom Kartenaufbau bei nahezu allen Kartentypen vorgesehen werden. Weil derartige Karten in Verbindung mit einem Farbband wie ein Druckstock wirken, werden sie in sehr einfacher Weise zur Übertragung der Kundendaten auf Rechnungen u.dgl. verwendet.

Als besonders nachteilig hat es sich jedoch herausgestellt, daß die hochgeprägten Zeichen schon mit einfachsten Mitteln durch Zurückprägen bzw. Niederbügeln beseitigt und durch andere Hochprägezeichen ersetzt werden können. Da die Hochprägezeichen einer Karte ihre Individualität geben und allein darüber der Bezug zum Kunden bzw. dem Konto des Kunden hergestellt werden kann, ist es einleuchtend, daß bei unerkannter Veränderung dieser Daten nach Abschluß einer Transaktion das Kundenkonto nicht belastet werden kann. Der auf derartige Manipulationen zurückzuführende Schaden erreicht allein in den USA bereits Millionenhöhe.

Da sich die Anwendung der Hochprägekarten inzwischen in allen Bereichen der Wirtschaft eingebürgert hat und die Vorteile der schnellen, ohne aufwendige Hilfsmittel möglichen Datenübertragung durch keinen anderen Kartentyp erbracht werden können, sucht man seit Jahren nach Möglichkeiten die einerseits die Weiterverwendung der Hochprägung ermöglichen, die aber andererseits Manipulationen verhindern bzw. Manipulationen ohne Hilfsmittel für jedermann erkennbar machen.

Im Laufe der Zeit wurden zur Lösung dieses Problems die verschiedensten Vorschläge gemacht.

So sollte zum Beispiel die Wahl von eigentümlich geformten Sonderzeichen das manipulatorische Nachprägen der Hochprägezeichen erschweren, da für derartige Karten die üblichen Prägestempel nicht verwendbar sind (DE-PS 334 117). Es hat sich jedoch gezeigt, daß durch einfaches Abgießen der Positiv- und Negativreliefs der Ausweiskarten die Erstellung beliebiger Prägestempel möglich ist, wodurch auch Sonderzeichen die Verfälschung der Karten nicht verhindern konnten.

Außerdem wurde versucht, durch Ausfüllen der durch die Prägung entstandenen rückseitigen Vertiefungen der Karte mit Kunststoffmaterial das Rückprägen zu verhindern. Da derartige Rückprägungen meist an der erwärmten Karte oder im einfachsten Fall mit einem heißen Bügeleisen vorgenommen werden, wurde die Ausfüllmasse gemäß einem weiteren Vorschlag auch mit Wärmeindikatoren versehen, die das nachträgliche Erwärmen der Karte zusätzlich durch einen irreversiblen Farbumschlag anzeigen.

Beide Vorschläge fanden in der Praxis ebenfalls keinen Niederschlag, da das Ausfüllmaterial beim nachträglichen Aufbringen nicht auf die Vertiefungen beschränkt werden kann und die im umliegenden Bereich aufgebrachten Materialien das Aussehen der Kartenrückseite sehr stören. Außerdem ist das nachträgliche Ausfüllen der Negativreliefs sehr zeitaufwendig, wodurch diese Maßnahme gerade bei großen Kartenstückzahlen wirtschaftlich nicht vertretbar ist.

Um die Möglichkeit der Rückprägung von Anfang an auszuschließen, wurde des weiteren ein Verfahren bekannt (DE-A-2 223 290), bei dem die Personalisierungsdaten in Metallplatten eingeprägt bereits bei der Kaschierung auf die Kartenoberfläche übertragen werden. Während des Kaschiervorganges erweicht das Kartenmaterial und fließt in die Vertiefungen der Metallplatte ein, ohne auf der Rückseite ein Negativrelief zu hinterlassen. Auf diese Weise entsteht eine Hochprägung, bei der ein Rückprägen der Zeichen nicht mehr möglich ist. Da zur Herstellung derartiger Karten aber für jede Karte eine Metallplatte mit eingravierten Personalisierungsdaten hergestellt werden muß, konnte sich auch dieses Verfahren aus wirtschaftlichen Gründen in der Praxis nicht durchsetzen.

Zur Verhinderung von Datenmanipulationen wurde außerdem vorgeschlagen, das identische Kartenabbild nocheinmal in einem Hologramm gespeichert auf der Karte vorzusehen (DE-OS25 45 799). Die Überprüfung erfolgt in einer Vorrichtung, die sowohl das Erscheinungsbild der Karte als auch das im Hologramm gespeicherte Abbild auf einem Sichtschirm neben oder übereinander projiziert. Da das im Hologramm gespeicherte Abbild nachträglich nicht veränderbar ist, soll der gegenseitige Vergleich beider Sichtschirmprojektionen eine eventuelle Manipulation aufdecken.

Obwohl auf diesem Weg nachträgliche Veränderungen an der Karte sicher erkannt werden können, bewies es sich als nachteilig, daß zur Überprüfung relativ komplizierte und teuere Prüfgeräte notwendig sind und die Prüfung der Absicherung ohne Hilfsmittel überhaupt nicht möglich ist. Da die Herstellung des Hologramms erst nach der Personalisierung der Karte durchgeführt werden kann und die Entwicklung und Fertigstellung des Hologramms weitere zeitaufwendige Arbeitsgänge erfordert, bereitet auch die Integration der Hologramme in die zugehörigen richtigen Ausweiskarten bei der Kartenherstellung Probleme, da die Hologramme ohne Lesegerät voneinander nicht zu unterscheiden sind und dem visuellen Betrachter der Speicherinhalt der Hologramme verborgen bleibt. Die Herstellung derartiger Karten ist insbesondere bei der Produktion großer Stückzahlen aus diesem Grund sehr aufwendig. Die Nachproduktion von Ausschußkarten ist aufgrund des notwendigerweise zeitlich unterbrochenen Herstellungsablaufes und der notwendigen Datenzuordnung wirtschaftlich nahezu nicht vertretbar. Derartige Karten fanden deshalb in der Praxis ebenfalls nur geringe Beachtung.

Zur Verhinderung von Datenverfälschungen wurde weiter vorgeschlagen, die fertig kaschierten Karten mittels eines Laserstrahlschreibers zu personalisieren (DE-PS-2 907 004, FR-A-2 496 936). Auf diesem Weg können zwar beliebige Kartentypen unabhängig von Kartenaufbau mit absolut verfälschungssicheren Daten versehen werden, wobei die Schriftzeichen auch refliefartige Oberflächenverformungen aufweisen können, derartige Karten sind aber üblicherweise nicht wie Hochprägekarten zur Übertragung von Kartendaten auf andere Aufzeichnungsträger geeignet, so daß die Funktion der Hochprägekarten durch laserpersonalisierte Karten ebenfalls nicht übernommen werden kann.

Die Aufgabe der Erfindung ist es daher, eine Ausweiskarte mit hochgeprägten Daten vorzuschlagen, bei der Mittel vorgesehen sind, die sowohl eine Fälschung als auch ein Verfälschung der Kartendaten verhindern bzw. bei der derartige unrechtmäßige Maßnahmen ohne Hilfsmittel erkennbar sind und bei der die Absicherungsmittel unabhängig vom Kartenaufbau auch bei Großserien in wirtschaftlicher Weise vorgesehen werden können.

Diese Aufgabe wird durch die im Kennzeichen des Hauptanspruches genannten Mittel gelöst. Ein Verfahren zur Herstellung derartiger Karten ist in den Verfahrensansprüchen genannt.

Der Erfindung liegt dabei die Erkenntnis zugrunde, daß es zur Erfüllung der zum Teil sehr widersprüchlichen Anforderungen nicht ausreicht, die Karten mit zusätzlichen Elementen oder doppelten Datensätzen auszustatten, sondern daß es notwendig ist, die vom Sicherheitsstandpunkt aus wertlosen Hochprägedaten durch ohne Hilfsmittel überprüfbare sicherheitstechnisch wertvolle Daten derart zu ergänzen, daß nicht nur komplexe Datensätze gegenübergestellt und miteinander verglichen werden können, sondern daß jedes Einzelelement dieses Datensatzes für sich ohne Zuordnungsschwierigkeiten auf Richtigkeit zu überprüfen ist.

Durch die Verwendung der Laserstrahlschreibtechnik ist die Absicherung der Hochprägung absolut verfälschungssicher und ohne Schwierigkeit, bzw. ohne Unterbrechung des Herstellprozeßes auf jeder Karte vorsehbar. Dadurch kann die Herstellung der Karten in einem in sich geschlossenen Vorgang erfolgen. Die Probleme, die auf die Zuordnung von Datensätzen zurückzuführen sind, werden vermieden.

Weiterhin erweist es sich als vorteilhaft, daß die Absicherung beliebig variierbar ist und damit an das Design eines speziellen Kartentyps angepaßt werden kann. Da die Absicherung durch unterschiedliche Ausführungsformen (verkleinerte Darstellung, deckungsgleiche Negativ- oder Positivschrift usw.) nahezu beliebig stark in den Hintergrund treten kann, wird das optische Erscheinungsbild in keiner Weise beeinträchtigt. Wegen der durch die Laserbeschriftung erzeugten optisch erkennbaren irreversiblen Materialumwandlung, die sich auch in das Karteninnere hineinerstreckt, ist eine unerkannte Veränderung, Beseitigung oder Ergänzung von Zeichen nahezu völlig auszuschließen. In einer besonderen Ausführungsform weisen die Zeichen auch ein charakteristisches Mikrorelief auf, das neben der visuellen auch noch eine manuelle Echtheitsprüfung der charakteristischen Laserschriftmerkmale ermöglicht.

Werden den einzelnen Hochprägezeichen Laserstrahlzeichen jeweils direkt räumlich zugeordnet, erhält man den weiteren Vorteil, daß die Karten schon mit einer oberflächlichen Grobprüfung taxierbar sind, bei der schwerpunktmäßig das Vorhandensein der Laserbeschriftung sowie deren Vollständigkeit erfaßbar ist. Sollten einzelne Zeichen von der Norm abweichen, ist eine genauere Prüfung dieser Einzelzeichen möglich ohne daß dabei die Zuordnung der Laserstrahlzeichen zu den Hochprägezeichen Schwierigkeiten bereitet.

Weitere Vorteile und Weiterbildungen der Erfindung sind den Unteransprüchen und den folgenden Ausführungsbeispielen zu entnehmen, die anhand der beigefügten Zeichnungen näher erläutert werden.

Es zeigen:

Fig. 1 eine Ausweiskarte in Draufsicht mit Hochprägezeichen und zugeordneten Laserstrahlzeichen,

Fig. 2 einen Schnitt A-B der Fig. 1, aus dem die strukturellen Unterschiede zwischen hochgeprägten und laserbeschrifteten Daten ersichtlich ist,

Fig. 3 eine weitere Ausführungsform der erfindungsgemäßen Absicherung von Hochprägungen,

Fig. 4 ein Blockschaltbild, in welchem der Verfahrensablauf der Kartenherstellung dargestellt ist.

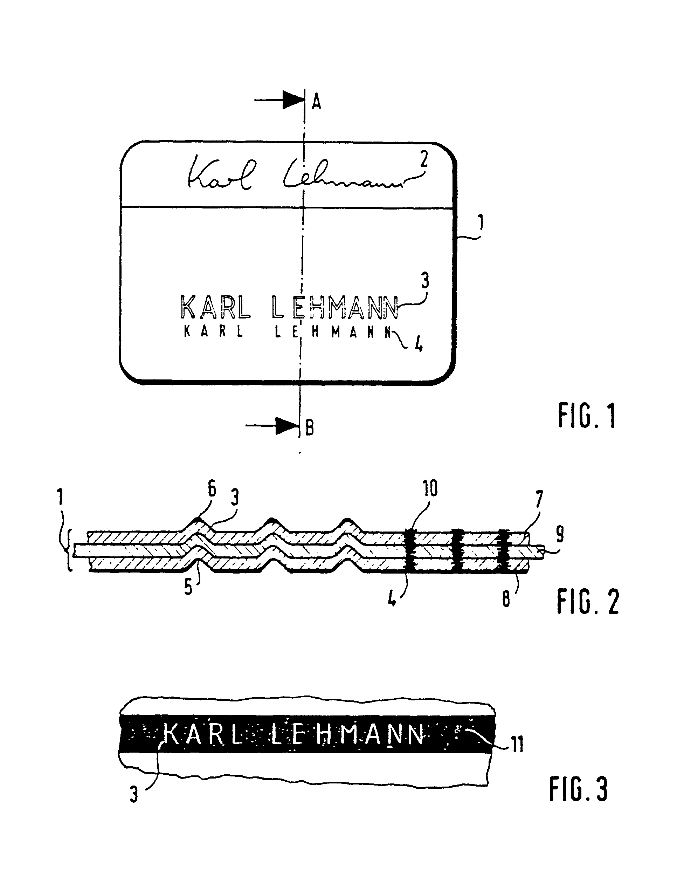

In Fig. 1 ist eine Ausweiskarte 1 in Draufsicht wiedergegeben, aus der die erfindungsgemäße Absicherung ersichtlich ist.

Die Ausweiskarte 1 weist im oberen Kartenbereich einen Unterschriftstreifen 2 mit vom Karteninhaber eigenhändig ausgeführter Unterschrift auf. Im unteren Kartenbereich ist der Name des Karteninhabers in hochgeprägten Zeichen 3 vorgesehen. Diese Zeichen 3 sind derart ausgeführt, daß sie unter Druckeinwirkung und in Verbindung mit einem Farbband auf andere Aufzeichnungsträger übertragbar sind. Üblicherweise sind auf Ausweiskarten weitere Hochprägezeichen 3 vorgesehen, die gegebenenfalls auch die Adresse des Karteninhabers, die Kontonummer, Kartennummer etc. wiedergeben können. Der Einfachheit halber wurde auf die Darstellung weiterer Zeichen sowie auf die Wiedergabe eines normalerweise ebenfalls vorgesehenen allgemeinen Druckbildes, das Angaben über das ausgebende Institut u.dgl. enthält, verzichtet.

Unter dem Hochprägezeichen 3 sind weitere Zeichen 4 vorgesehen, die den gleichen Informationsgehalt wie die Hochprägezeichen aufweisen, die ebenfalls visuell erkennbar sind und die unverfälschlich im Karteninneren mit einem Laserstrahlschreiber eingebracht sind.

Diese mittels des Laserstrahlschreibers eingebrachten Zeichen 4, kurz als Laserstrahlzeichen oder gelaserte Zeichen bezeichnet, sind so eingebracht, daß jedes einzelne Zeichen genau unterhalb des korrespondierenden Hochprägezeichens 3 angeordnet ist. Im Rahmen der Erfindung wäre es ebenfalls denkbar, die Laserzeichen 4 in einem anderen Kartenbereich vorzusehen. Die in Fig. 1 dargestellte Ausführungsform ist jedoch besonders vorteilhaft, da dabei ein einfacher Zeichen-für-Zeichen-Vergleich ohne Zuordnungsprobleme möglich ist. Bei dieser Ausführungsform erweist es sich außerdem als besonders vorteilhaft, daß es auch möglich ist, mit einem Blick die Vollständigkeit beider Zeichensätze festzustellen.

Manipulationen, die bisher durch einfaches Hinzufügen von Hochprägezeichen 3 möglich waren, können nun, da das unerkannte Ergänzen der Laserzeichen 4 aufgrund des charakteristischen Aussehens und des technologischen Aufwandes auszuschließen ist, auch ohne den Informationsgehalt der einzelnen Zeichen zu prüfen, am fehlenden Laserzeichen problemlos erkannt werden. Andere Manipulationen, die auf das Niederbügeln der ursprünglichen Hochprägezeichen und das Nachprägen neuer Zeichen zurückzuführen sind, sind einerseits daran zu erkennen, daß der Informationsgehalt beider Zeichensätze voneinander abweicht und andererseits daran, daß die Laserzeichen 4 das durch das Niederbügeln zerstörte Mikrooberflächenrelief nicht mehr aufweisen.

Fig. 2 zeigt den Schnitt A-B der in Fig. 1 dargestellten Ausweiskarte 1 im Bereich der Präge- und Laserzeichen. Der Schnitt durch das Hochprägezeichen 3 zeigt, daß das Zeichen auf der Kartenvorderseite als Positivrelief und auf der Kartenrückseite in Form eines deckungsgleichen Negativreliefs 5 vorliegt. Durch den von der Kartenrückseite 8 her erfolgten Prägevorgang sind alle Einzelschichten des Kartenaufbaus (im dargestellten Beispiel drei Schichten) in gleicher Weise verformt. Im Scheitelbereich der Hochprägung 3 sind die Zeichen der besseren Lesbarkeit wegen mit einer zur Umgebung kontrastierenden Farbschicht 6 versehen.

Die gelasterten Zeichen 4 können, wie in Fig. 2 gezeigt, primär in der Vorderseite der opaken Mittelschicht 9 eingebrannt sein. Es ist jedoch auch möglich, die Materialverfärbung sowohl über den Querschnitt der Mittelschicht 9 als auch in die Deckfolie 7 hinein wirken zu lassen. In Abhängigkeit vom Kartentyp bzw. vom Kartenaufbau kann die Laserbeschriftung auch nur in der Deckfolie oder durch alle Schichten des Kartenaufbaus hindurch vorgesehen sein. Als besonders vorteilhaft erweist es sich, wenn die Laserbeschriftung neben der Verfärbung der Mittelschicht 9 auch in der Deckfolie 7 deckungsgleich zu dem Laserzeichen 4 zusammen mit einem Mikrorelief 10 vorgesehen ist, das dann als charakteristisches Merkmal der Laserbeschriftung auch manuell auf Vorhandensein geprüft werden kann.

In Fig. 3 ist eine weitere Variante der erfindungsgemäßen Absicherung von Hochprägezeichen dargestellt. Bei dieser Ausführungsform sind die Laserzeichen 4 als Negativschriftzeichen deckungsgleich über den Hochprägezeichen 3 angeordnet. Die Hochprägezeichen, die in diesem Fall vorzugsweise nicht einzufärben sind, erscheinen dabei als helle Zeichen vor dunklem Hintergrund 11. Die Überprüfung der Echtheit und Unversehrtheit erfolgt auch hier anhand des charakteristischen Erscheinungsbildes und des Mikroreliefs der gelasterten Kartenbereiche 11. Da die Negativdarstellung der Laserzeichen 4 bei der in Fig. 3 gezeigten Ausführungsform mehr den Eindruck einer eingefärbten Hintergrundstruktur erweckt, tritt der durch die Laserzeichen dargestellte doppelte Datensatz bei oberflächlicher Betrachtung überhaupt nicht in Erscheinung.

Manipulationen sind bei diesem Beispiel aber ebenso auszuschließen, da das Niederbügeln der ursprünglichen Zeichen auch das Mikrorelief der Umgebung zerstört, da im niedergebügelten Bereich die übergangslose charakteristische Verfärbung des Kartenmaterials nachträglich nicht möglich ist und da im Bereich der eventuell neu geprägten Zeichen die Laserschraffur nicht zu entfernen ist. Obwohl bei dieser Ausführungsform die Laserzeichen in besonders dezenter Form vorliegen, kann bei Manipulationen sowohl das frühere Zeichen als auch das nachträglich eingebrachte sehr einfach erkannt werden.

Die Laserzeichen können auch als positivzeichen jeweils deckungsgleich über den Hochprägezeichen vorgesehen sein. Nach Rückprägung eines derartigen Zeichens bleibt auch hier das Laserzeichen im Ausweiskartenmaterial unverändert vorhanden.

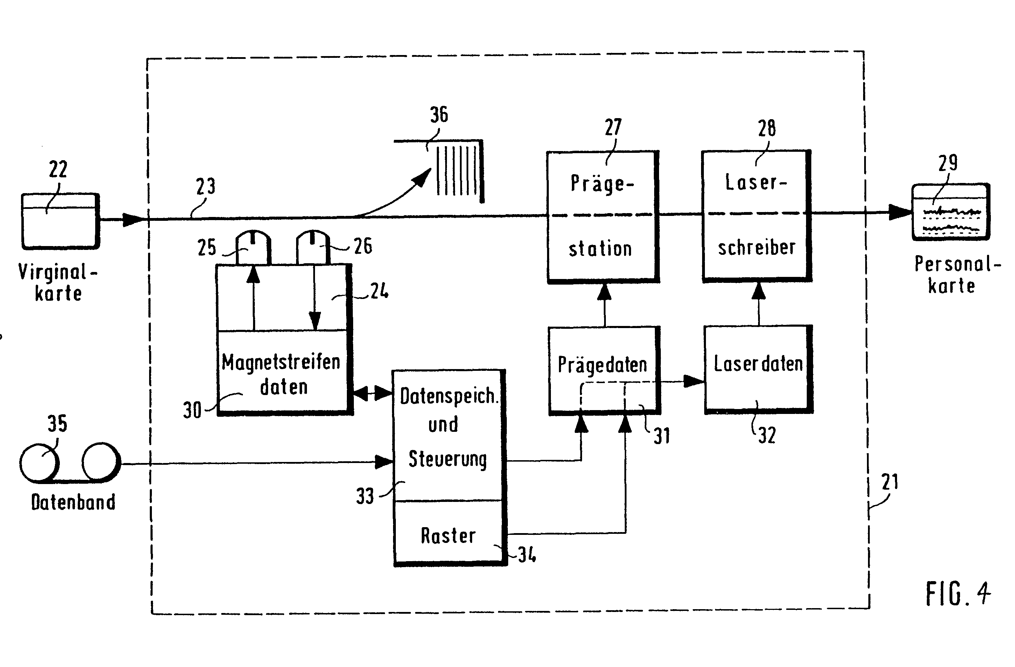

In Fig. 4 ist das Blockschaltbild einer Vorrichtung beschrieben, mit der die erfindungsgemäßen Ausweiskarten hergestellt werden können.

Bei der als strichliertes Rechteck 21 dargestellten Vorrichtung werden die Virginalkarten 22, d. h. die neutralen, unpersonalisierten Ausweiskarten, über eine Eingabestation dem Transportsystem 23 zugeführt. Das Transportsystem 23 befördert die Karten 22 zu einer Station 24, in der die Beschriftung der Ausweiskartenmagnetstreifen vorgenommen wird, von dort in eine Hochprägestation 27 und anschließend in eine Station 28, in der die Laserzeichen eingebracht werden. Nach Abschluß der Laserbeschriftung werden die fertig personalisierten Karten 29 schließlich in richtiger Reihenfolge in einem Sammelbehälter abgelegt.

Jede der Beschriftungsstationen 24, 27 und 28 weist einen Datenspeicher auf, in dem die von der jeweiligen Station zu bearbeitenden Daten zwischengespeichert werden können. Alle drei Stationen werden von einem zentralen Datenspeicher 33 mit den jeweiligen Daten versorgt. Der Zentralspeicher 33 erhält seine Daten wiederum von einem Datenband 35, das dem Kartenhersteller vom jeweiligen kartenausgebenden Institut zur Verfügung gestellt wird. Im Zentralspeicher 33 ist außerdem die Ablaufsteuerung der gesamten Vorrichtung sowie ein Speicher 34 integriert, in dem die unterschiedlichen Kartenformate bzw. verschiedene den unterschiedlichen Kartenformaten zugeordnete Koordinatenraster abgespeichert sind.

Die Reihenfolge der Stationen 24, 27 und 28 muß nicht zwangsläufig in der genannten Form vorliegen. Die erfindungsgemäßen Karten sind auch in anderer Reihenfolge herstellbar. Die "Beschriftung" der Magnetstreifen in der ersten Station hat sich jedoch besonders bewährt, da in dieser Station die meisten Fehlproduktionen zu erwarten sind und bei sofortiger Aussonderung dieser gegebenenfalls nach Reinigung nocheinmal verwendbaren "Ausschußkarten" die Produktionskapazität der Anlage am geringsten belastet wird. In den Fällen, in denen die Laserbeschriftung auf eine vorherige Einfärbung der Hochprägezeichen aufbaut, ist außerdem die Laserbeschriftung der Karten in der letzten Station unumgänglich.

Der Schwerpunkt des in der Fig. 4 dargestellten Verfahrensablaufes ist darin zu sehen, daß die vom Datenband 35 bereitgestellten Daten mit einem dem Kartentyp zugeordneten Koordinatenraster in Einklang gebracht werden und daß durch diese koordinatenmäßige Datenzuordnung die exakte Beschriftung in den unterschiedlichen Beschriftungsstationen 27 und 28 möglich ist. Im einzelnen funktioniert die Vorrichtung wie folgt:

Zuerst werden vom Datenband 35 die gesamten Personalisierungsdaten einer Ausweiskarte in den Zentralspeicher eingelesen (bei ausreichendem Speicherplatz können auch die Daten mehrerer Karten oder auch das gesamte Datenband eingelesen werden). In Abhängigkeit vom zu bearbeitenden Kartentyp wird außerdem das den Karten zugeordnete und im Speicher 34 fest eingespeicherte Koordinatenraster zusammen mit der Beschriftungsart ausgewählt und für die weitere Bearbeitung der Karten zugrundegelegt.

Nun werden aus dem Datensatz einer Karte die für die "Magnetbandbeschriftung" vorgesehen Daten in den Speicher 30 eingelesen, eine Virginalkarte 22 aus dem Eingabebehälter vereinzelt und an den Magnetköpfen 25 und 26 vorbeibewegt. Während des Vorbeitransportes werden die Magnetdaten mittels des Magnetkopfes 25 auf die Magnetspur der Ausweiskarte aufgezeichnet und anschließend vom Magnetkopf 26 wieder gelesen. Ergibt der Vergleich der vom Magnetkopf 26 gelesenen Daten im Speicherbaustein 30 Übereinstimmung mit den aufgezeichneten Daten, so wird die Karte zur Prägestation weitertransportiert. Bei Fehlen der Übereinstimmung der Daten wird die Karte in das Rückweisungsfach 36 ausgesondert und der gleiche Prozeß mit einer neuen Karte wiederholt.

Die ausgesonderten Karten, bei denen unter Umständen nur geringfügige Verschmutzungen des Magnetstreifens den Beschriftungsvorgang störten, können nach Reinigung des Magnetstreifens später unter Umständen erneut verarbeitet werden.

Während des Transportes der Ausweiskarten zur Prägestation werden die zu prägenden Daten durch Zuordnung zu dem im Speicher 34 vorgegebenen Koordinatenraster koordinatenmäßig genau definiert. Da die Form und die Abmaße der einzelnen Zeichen bekannt sind, liegt nun exakt fest, welche Kartenbereiche mit welchen Prägestrukturen versehen werden. In der Prägestation werden die Einzelzeichen entsprechend der Festlegung in die Kartenoberfläche eingeprägt.

Nach dem Hochprägevorgang werden die Daten der Hochprägestation dem Laserstrahlschreiber zur Verfügung gestellt. Dies kann entweder durch Zugängigmachen der Speicherinhalte des Speichers 31 oder, wie in Fig. 4 gezeigt, durch Umspeichern in den Speicher 32 des Laserstrahlschreibers geschehen. Im Speicher 32 werden die Einzelzeichen dann entsprechend der anfangs gewählten Schriftart angepaßt, d. h. verkleinert, vergrößert, in Negativschrift umgewandelt od. dgl. und den dafür vorgesehenen Koordinatenbereichen zugeordnet, d. h. den Hochprägekoordinaten überlagert, zu diesem versetzt od. dgl.

Nach Festlegung der lokalen Bereiche und der Form der Laserzeichen werden diese ebenfalls in die Karte eingeschrieben. Nach Abschluß der Laserbeschriftung wird die Karte in ein Fach für fertige Karten abgelegt.

Im Zuge des beschriebenen Verfahrensablaufes wird der in Fig. 3 dargestellte Schrifttyp dadurch erzeugt, daß mit dem Laserstrahlschreiber die gesamte Hochprägezeile oder der mit Hochprägezeichen versehene Zeilenbereich eng mit Laserstrichen überzogen wird, wobei im Bereich der Hochprägezeichen die Strahlenergie zumindest soweit reduziert wird, daß in diesem Bereich keine Verfärbung des Kartenmaterials erfolgt.

Die in Fig. 3 dargestellte Überlagerung der Hochprägezeichen mit identischen Positiv-Laserzeichen ist wegen der zu berücksichtigenden Prägetoleranzen und der Notwendigkeit, die Laserzeichen exakt auf der Scheitellinie der Prägezeichen vorsehen zu müssen, besonders kritisch. Die problemlose Durchführung gelingt trotzdem, wenn die Scheitelbereiche der Prägezeichen mit einer Farbe versehen werden, die sich einerseits mit dem Kartenmaterial sehr innig verbindet und andererseits die Laserstrahlenergie sehr stark absorbiert. Überstreicht man die derart präparierten Hochprägezeichen kontinuierlich mit einem Laserstrahl, dessen Energie geringfügig unterhalb der Ansprechschwelle des nicht mit dem Farbüberzug versehenen Kartenmaterials dosiert ist, so wird lediglich in den Farbbereichen der Hochprägung ausreichend viel Energie gebunden, die für die Laserbeschriftung notwendig ist. Der Vorteil dieses Verfahrens ist darin zu sehen, daß für die "Belaserung" der Karte lediglich die Koordinaten des Zeilenortes sowie der Zeilenlänge und Zeilenhöhe berücksichtigt werden müssen. Der Informationsinhalt der Einzelzeichen sowie deren Form und Größe muß bei der Laserbeschriftung nicht berücksichtigt werden. Für die Einfärbung der Hochprägezeichen sind praktisch alle Farben verwendbar, die auf gleicher Lösungsmittelbasis wie das Kartenmaterial aufgebaut sind und die mit die Laserstrahlung absorbierenden Pigmenten eingefärbt sind. Da Ruß das gesamte Spektrum vom ultravioletten bis infraroten Spektralbereich gleichmäßig absorbiert, sind rußhaltige Farben unabhängig vom verwendeten Laserstrahlschreiber auf jeden Fall verwendbar.

Verwendet man statt stark absorbierender Farben solche, die die Laserstrahlung stark reflektieren, zum Beispiel stark reflektierende Metallfarben, so kann die Negativbeschriftung auch ohne aufwendige Ausblendung der Hochprägezeichen durch großflächiges kontinuierliches Beschriften der Hochprägezeilen mit einem Laserstrahl erreicht werden, dessen Dosierung gerade oberhalb der Ansprechschwelle des Kartenmaterials ausgelegt ist.

Ähnliche Erfolge sind zu erzielen, wenn das Kartenmaterial zum Beispiel durch großflächiges Bedrucken mit Farbstoffen versehen ist, die unter Einwirkung der Laserstrahlenergie einen Farbumschlag aufweisen. In diesem Fall sind die Scheitelbereiche der Hochprägezeichen ebenfalls mit einer reflektierenden Farbe zu versehen, die den Farbumschlag durch Dämpfung der Laserstrahlenergie verhindern. Bei der Auswahl derartiger Farbstoffe ist lediglich zu beachten, daß die Ansprechtemperatur oberhalb der Kaschiertemperatur der Ausweiskarte, d. h. höher als 180°C liegt.

**Patentansprüche**

1. Ausweiskarte mit alphanumerischen Zeichen, die als Druckstock verwendbar in hochgeprägter Form vorliegen und weiteren aufgedruckten Informationen in Form von alphanumerischen Zeichen oder Bildern, dadurch gekennzeichnet, daß zusätzlich zu den hochgeprägten Zeichen (3) ein Datensatz (4) mit identischem Informationsgehalt vorgesehen ist und dieser Datensatz (4) visuell ohne zusätzliche Hilfsmittel erkennbar mittels eines Laserstrahlschreibers in das Ausweiskartenmaterial eingeschrieben ist.

2. Ausweiskarte nach Anspruch 1, dadurch gekennzeichnet, daß im Bereich eines jeden hochgeprägten Zeichens (3) ein gleiches mit einem Laserstrahlschreiber eingebrachtes Zeichen (4) vorgesehen ist.

3. Ausweiskarte nach Anspruch 2, dadurch gekennzeichnet, daß die gelaserten Zeicher (4) in unmittelbarer Nachbarschaft der jeweils zugehörigen hochgeprägten Zeichen (3) angeordnet sind, so daß ein direkter Vergleich der Zeichenpaare möglich ist.

4. Ausweiskarte nach Anspruch 2, dadurch gekennzeichnet, daß den hochgeprägten Zeichen (3) ein jeweils identisches gelasertes Zeichen (4) als Negativabbild (11) deckungsgleich überlagert ist.

5. Ausweiskarte nach Anspruch 2, dadurch gekennzeichnet, daß den hochgeprägten Zeichen ein jeweils identisches gelasertes Zeichen (4) überschrieben ist.

6. Ausweiskarte nach Anspruch 1 bis 3, dadurch gekennzeichnet, daß die gelaserten Zeichen (4) ein zum jeweiligen Zeichen deckungsgleiches Mikrorelief (1) auf der Kartenoberfläche aufweisen.

7. Verfahren zur Herstellung von Ausweiskarten mit alphanumerischen Zeichen, die als Druckstock verwendbar in hochgeprägter Form vorliegen, und weiteren aufgedruckten Informationen in Form von alphanumerischen Zeichen oder Bildern, gekennzeichnet durch die Schritte

a) Einspeichern eines Datensatzes der alphanumerischen Zeichen für die Hochprägung in einen Speicher (33),

b) Zuordnung der Kartenkoordinaten zu jedem der hochzuprägenden Zeichen,

c) Bereitstellung der koordinatenmäßig definierten Daten für die Zeichen an eine Prägestation (27),

d) Hochprägen einer mit aufgedruckten Informationen und gegebenenfalls bereits mit Magnetdatenversehenen Karte (22),

e) Bestimmung der mit gelaserten Zeichen zu versehenen Kartenbereiche,

f) Bereitstellung der koordinatenmäßig definierten Daten für die Zeichen an einem Laserstrahlschreiber (28),

g) Anpassen dieser Daten an die für die zu lasernden Zeichen gestellten Anforderungen bezüglich Form und Größe, und

h) erneutes Einschreiben der Zeichen in die dafür vorgesehenen Kartenbereiche mittels eines Laserstrahlschreibers (28), wobei die gelaserten Zeichen inhaltsgleich zu den ihnen zugeordneten hochgeprägten Zeichen sind und in eine visuell ohne Hilfsmittel erkennbaren Form in das Ausweiskartenmaterial eingeschrieben sind.

8. Verfahren nach Anspruch 7, dadurch gekennzeichnet, daß die Anpassung der Daten derart erfolgt, daß jedem hochgeprägten Zeichen (3) ein gleiches Zeichen zugeordnet und dieses Zeichen zum hochgeprägten Zeichen versetzt mit dem Laserstrahlschreiber in das Ausweiskartenmaterial eingeschrieben wird.

9. Verfahren nach Anspruch 7, dadurch gekennzeichnet, daß die Anpassung der Daten derart erfolgt, daß der Laserstrahl nur die Flächenbereiche, in denen hochgeprägte Zeichen vorgesehen sind, großflächig überstreicht.

10. Verfahren nach Anspruch 9, dadurch gekennzeichnet, daß der Laserstrahl im Bereich der Hochprägezeichen (3) in seiner Energie derart reduziert wird, daß die Hochprägezeichen (3) nicht vom Laserstrahl verfärbt werden.

11. Verfahren nach Anspruch 9, dadurch gekennzeichnet, daß die Scheitelbereiche der hochgeprägten Zeichen vor dem großflächigen Beaufschlagen mit Laserenergie mit einer die Laserstrahlenergie absorbierenden Farbe versehen werden und die Energie des Laserstrahlschreibers derart dosiert ist, daß die Kartenbereiche, die nicht mit absorbierender Farbe versehen sind, vom Laserstrahl nicht verfärbt werden im Bereich der absorbierenden Farbe aber eine Verfärbung eintritt.

12. Verfahren nach Anspruch 9, dadurch gekennzeichnet, daß die Scheitelbereiche der hochgeprägten Zeichen vor dem großflächigen Beaufschlagen mit Laserstrahlenergie mit einer die Laserstrahlenergie reflektierenden Farbe versehen werden und die Energie des Laserstrahlschreibers derart dosiert ist, daß nur die Kartenbereiche, die nicht mit der reflektierenden Farbe versehen sind, vom Laserstrahl verfärbt werden.

13. Verfahren nach Anspruch 12, dadurch gekennzeichnet, daß zumindest die mit Hochprägezeichen (3) zu versehenden Kartenbereiche zusätzlich großflächig mit Farbstoffen versehen sind, die unter Einwirkung der Laserstrahlenergie einen Farbumschlag aufweisen.

**Claims**

1. Identity card with alphanumeric characters which are provided so that they are embossed in relief and can be used as a printing block and with further printed on information in the form of alphanumeric characters or images, characterised in that a data record (4) containing identical information is provided in addition to the characters (3) embossed in relief and this data record (4) can be written into the identity card material by means of a laser beam recording device so that it can be recognised visually without additional ancillary means.

2. Identity card according to claim 1, characterised in that a similar character (4) applied by means of a laser beam recording device is provided in the area of each character (3) embossed in relief.

3. Identity card according to claim 2, characterised in that the character (4) applied by laser beam is arranged in the immediate vicinity of the corresponding associated character (3) embossed in relief, so that a direct comparison can be made of the pairs of characters.

4. Identity card according to claim 2, characterised in that an in each case, identical laser-formed character (4) is superimposed in a coincidental manner on the characters embossed in relief as a negative image (11).

5. Identity card according to claim 2, characterised in that an in each case identical laser-formed character (4) is written over the characters embossed in relief.

6. Identity card according to claims 1 to 3, characterised in that the laser-formed characters (4) are provided with a microrelief on the card surface which co-incides with the corresponding character.

7. Process for producing identity cards with alphanumeric characters, which are provided so that they are embossed in relief and can be used as a printing block and additional printed on information in the form of alphanumeric characters or images, characterised by the following steps:

a) Entering a data record of the alphanumeric characters for embossing in relief in a store (33),

b) Arrangement of the card coordinates in relation to each of the characters to be embossed in relief,

c) Making available the data for the characters defined on the basis of the coordinates at an embossing station (27),

d) Embossing in relief a card (22) provided with printed on information and where applicable already provided with magnetic data,

e) Determining the card areas to be provided with laser-formed characters,

f) Making available the data for the characters defined on the basis of the coordinates at a laser beam recording device (28),

g) Adaptation of this data to the requirements relating to shape and size in connection with the laser-formed characters and

h) Writing in again of the characters into the card areas provided for this purpose by means of a laser beam recording device (28), whereby the laser-formed characters are similar in content to the characters which are embossed in relief and associated with them and are written into the identity card material in a form which is visually recognisable without ancillary means.

8. Process according to claim 7, characterised in that the adaptation of the data is effected in such a way that a similar character is associated with each character (3) embossed in relief and this character is written into the identity card material with the laser beam recording device in an offset arrangement in relation to the character embossed in relief.

9. Process according to claim 7, characterised in that the adaptation of the data is effected in such a way that the laser beam only passes over in a broad sweep the surface areas in which characters embossed in relief are present.

10. Process according to claim 9, characterised in that the energy of the laser beam is reduced to such an extent in the area of the characters (3) embossed in relief that the colour of the characters (3) embossed in relief is not changed by the laser beam.

11. Process according to claim 9, characterised in that the apex areas of the characters embossed in relief are provided before the application over a large surface area of laser energy with a dye which absorbs the laser energy and the energy of the laser beam recording device is metered in such a way that the colours of the areas of the card which are not provided with absorbing dye are not changed by the laser beam, whilst a change in colour does occur in the area of the absorbing dye.

12. Process according to claim 9, characterised in that the apex areas of the characters embossed in relief are provided with a dye which reflects the laser beam energy before the laser beam energy is applied over a wide area and the energy of the laser beam recording device is metered in such a way that only the colour of the card areas which are not provided with the reflecting dye, is changed by the laser beam.

13. Process according to claim 12, characterised in that at least the areas of the card to be provided with characters (3) embossed in relief are provided in addition with dyes over a wide area, which are subjected to a colour change by the action of the laser beam energy.

**Revendications**

1. Carte d'identité comportant des signes alphanumériques se présentant sous une forme imprimée en relief et utilisable comme cliché ainsi que d'autres informations imprimées sous la forme de signes alphanumériques ou d'images, caractérisée en ce que, en plus des signes imprimés en relief (3), il est prévu un ensemble de données (4) ayant un contenu d'informations identique et cet ensemble de données (4) est enregistré au moyen d'un enregistreur à rayon laser dans la matière de la carte d'identité de façon à pouvoir être décelé visuellement sans moyens auxiliaires additionnels.

2. Carte d'identité selon la revendication 1, caractérisée en ce que, dans la zone de chaque signe imprimé en relief (3), il est prévu un signe identique (4) produit à l'aide d'un enregistreur à rayon laser.

3. Carte d'identité selon la revendication 2, caractérisée en ce que les signes produits au laser (4) sont disposés au voisinage immédiat des signes imprimés en relief (3) qui leur sont respectivement associés de manière qu'il soit possible d'effectuer une comparaison directe des paires de signes.

4. Carte d'identité selon la revendication 2, caractérisée en ce que, pour chaque signe imprimé en relief (3), il est prévu en superposition et en concordance exacte un signe identique au laser (10) formé en représentation négative (11).

5. Carte d'identité selon la revendication 2, caractérisée en ce que, sur chaque signe imprimé en relief, est écrit un signe identique (4) formé au laser.

6. Carte d'identité selon une des revendications 1 à 3, caractérisée en ce que les signes (4) formés au laser présentent, sur la surface de la carte, un micro-relief placé en coïncidence avec le signe correspondant.

7. Procédé de fabrication de cartes d'identité comportant des signes alphanumériques qui se présentent sous une forme imprimée en relief avec possibilité d'utilisation comme un cliché et d'autres informations imprimées sous la forme de signes alphanumériques ou d'images, caractérisé par les étapes consistant à:

a) mémoriser un ensemble de données des signes alphanumériques pour l'impression en relief dans une mémoire (33);

b) associer les coordonnées de la carte avec chacun des signes à imprimer en relief;

c) préparer les données, définies par les coordonnées, pour les signes dans un poste d'impression (27);

d) imprimer en relief une carte (22) déjà pourvue d'informations imprimées et, le cas échéant, de données magnétiques;

e) déterminer les zones de la carte à pourvoir de signes à produire au laser;

f) préparer les données, définies par les coordonnées, pour les signes, dans un enregistreur à rayon laser (28);

g) adapter ces données aux impératifs concernant la forme et la grosseur des signes à produire au laser;

h) effectuer une nouvelle écriture des signes dans les zones de la carte prévues à cet effet au moyen d'un enregistreur à rayon laser (28), les signes produits au laser ayant un contenu identique aux signes imprimés en relief qui leur sont associés et étant écrits dans la matière de la carte d'identité sous une forme pouvant être décelée visuellement sans moyens auxiliaires.

8. Procédé selon la revendication 7, caractérisé en ce que l'adaptation des données est effectuée de telle sorte qu'à chaque signe imprimé en relief (3) soit associé un signe identique et que ce signe soit écrit, avec décalage par rapport au signe imprimé en relief, à l'aide de l'enregistreur à rayon laser, dans la matière de la carte d'identité.

9. Procédé selon la revendication 7, caractérisé en ce que l'adaptation des données est effectuée de telle sorte que le rayon laser balaie sur une grande surface seulement les zones superficielles dans lesquelles sont disposés des signes imprimés en relief.

10. Procédé selon la revendication 9, caractérisé en ce que l'énergie du rayon laser est réduite dans la zone des signes imprimés en relief (3), de telle sorte que ces signes imprimés en relief (3) ne soient pas décolorés par le rayon laser.

11. Procédé selon la revendication 9, caractérisé en ce que les zones de sommets des signes imprimés en relief sont pourvues, avant la sollicitation sur une grande surface par de l'énergie laser, d'une couleur absorbant l'énergie du rayonnement laser et en ce que l'énergie de l'enregistrement par rayon laser est dosée de telle sorte que les zones de la carte qui ne sont pas pourvues d'une couleur absorbante ne soient pas décolorées par le rayon laser mais de telle sorte qu'il se produise cependant une décoloration dans la zone de la couleur absorbante.

12. Procédé selon la revendication 9, caractérisé en ce que les zones de sommet des signes imprimés en relief sont pourvues, avant la sollicitation sur une grande surface par de l'énergie de rayonnement laser, d'une couleur réfléchissant l'énergie de rayonnement laser et en ce que l'énergie de l'enregistreur par rayon laser est dosée de telle sorte que seulement les zones de carte, qui ne sont pas pourvues de la couleur réfléchissante, soient décolorées par le rayonnement laser.

13. Procédé selon la revendication 12, caractérisé en ce qu'au moins les zones de la carte à pourvoir de signes imprimés en relief (3) sont pourvues additionnellement sur une grande surface de colorants qui subissent une conversion de couleurs sous l'action de l'énergie du rayonnement laser.

FIG. 1

FIG. 2

FIG. 3

FIG. 4

22 Virginal-karte

23

36

27 Präge-station

28 Laser-schreiber

29 Personal-karte

25 26

24

30 Magnetstreifen daten

33 Datenspeich. und Steuerung

34 Raster

31 Prägedaten

32 Laserdaten

35 Datenband

21

0113131

3